# EUROPÄISCHE PATENTSCHRIFT

(11) **EP 0 641 287 B1**
(45) Veröffentlichungstag und Bekanntmachung des Hinweises auf die Patenterteilung: **11.06.1997**
(21) Anmeldenummer: 94908244.0
(22) Anmeldetag: 14.03.1994
(51) Int. Cl.: B60R 21/16, D03D 15/12, B01D 39/08

(54) **FILTERGEWEBE FÜR GASKISSEN**
FILTER FABRIC FOR AIRBAGS
TISSU FILTRANT POUR SACS GONFLABLES

(30) Priorität: 17.03.1993 CH 802/93
(43) Veröffentlichungstag der Anmeldung: 08.03.1995
(73) Patentinhaber: Rhône-Poulenc Viscosuisse SA, 6020 Emmenbrücke (CH)
(72) Erfinder: BERGEN EBERHARD, CH-6032 Emmenbrücke (CH)
(74) Vertreter: Herrmann, Peter Johannes
(86) Internationale Anmeldenummer: CH9400054
(87) Internationale Veröffentlichungsnummer: WO9421494

(56) Entgegenhaltungen:
- EP-A- 0 454 213
- EP-A- 0 501 295
- EP-A- 0 523 546
- US-A- 4 202 382
- PATENT ABSTRACTS OF JAPAN vol. 17, no. 652 (M-1520) 3. Dezember 1993 & JP,A,05 213 139 (TEIJIN LTD) 24. August 1993

## Beschreibung

Die Erfindung betrifft ein unbeschichtetes Filtergewebe mit einer reversiblen Gewebedehnung von 20-50%, und einer Luftdurchlässigkeit von 30 bis 100 l pro dm²/min, gemessen bei einem Druck von 500 pa zur Herstellung von aufblasbaren Gaskissen für Fahrzeuge.

Gaskissen als Aufprallschutzeinrichtungen für Insassen eines Kraftfahrzeuges sind bekannt (DE-C-36 44 554). In den bekannten Gaskissen sind ein Teil der Wandungen als Filtergewebe ausgebildet. Das Filtergewebe besteht aus einer Mischung von Aramid- und Polyamidfasern. Aramid/Polyamidgewebe aus Stapelfasern wurde wegen seiner Rauhigkeit und Dimensionsstabilität gewählt. Die Rauhigkeit gewährleistet eine bessere Filterwirkung der Partikel im Gas. Auch sei die Porendichte bei Verwendung von Stapelfasern bzw. Spinnfasern gleichmässiger.

Gewebe aus gesponnenen Garnen haben jedoch den Nachteil, dass sie in der Herstellung aufwendiger als Filamentgarne sind. Aramid als Faserrohstoff hat den Nachteil, dass die Gewebedehnung bezw. das Arbeitsvermögen zu gering ist und dadurch der Gasdurchtritt verzögert eintritt. Auch ist die Weiterreissfestigkeit nicht genügend. Aramid ist nur unter hohem Aufwand und mit grossen Kosten herstellbar.

Aus der gattungsbildenden EP-A-523 546 ist aber auch ein Filtergewebe mit einer reversiblen Dehnung der Kett- und Schussfäden von über 15 % und einer Luftdurchlässigkeit im Bereich von < 120 l/dm² . min bekannt. Das bekannte Gewebe weist eine gute Alterungsbeständigkeit auf. Beim bekannten Garn ist das Problem der Hitzebeständigkeit für ein aufblasbares Gaskissen weder angesprochen und somit auch nicht gelöst.

Aufgabe der Erfindung ist es, ein hitzebeständiges gasdurchlässiges Gewebe zur Verfügung zu stellen, welches für unbeschichtete Filtergewebe, insbesondere für Gaskissen, geeignet und wirtschaftlich herstellbar ist.

Die Aufgabe wird erfindungsgemäss durch einen Kern-Mantelfaden, wobei der Kernfaden aus einem hitzegeschützten Filamentgarn aus einem Linearen Polyamid, gelöst. Als wärmestabilisierte Polyamidgarne kommen vorzugsweise solche in Frage, deren Wärmeschutzeigenschaften auf der Basis von Cu/I im Garn beruhen, wie sie beispielsweise in der WO 93/15138 beschrieben sind.

Ein thermoplastisches Filamentgarn als Kernfaden, Grundfaden oder Seelenfaden hat gegenüber Aramid den Vorteil einer besseren Verarbeitung zu einem Gewebe. Polyamidgewebe sind wesentlich einfacher und damit wirtschaftlicher herzustellen als die bekannten Aramide. Als Polyamide kommen bevorzugt Polyamid 66, Polyamid 6 oder Polyamid 46 in Frage.

Die Gasdurchlässigkeit beträgt 30 bis 100 1 pro dm2/min, insbesondere 30 bis 80 l pro dm2/min, bevorzugt 25 bis 80 1 pro dm2/min und einem Druck von 500 pa. Der Kernfaden aus einem Polyamid hat den Vorteil, dass er, abhängig von seiner Herstellung, jede gewünschte Dehnung zwischen 20 und 50%, insbesondere 25-30 %, bevorzugt 30 %, bezogen auf die Länge des ungedehnten Filamentes, gestattet.

In einer bevorzugten Ausführungsform wird der Kernfaden im Corezwirnverfahren mit einem Garn oder Zwirn umgeben. Dabei kann jedes hitzestabile Garn oder Zwirn verwendet werden.

In einer Variante wird der Kernfaden im sogenannten Corespunverfahren ummantelt. Die Ummantelung kann durch wärmestabilisierte oder besonders wärmeresistente Fasern oder Garn, beispielsweise aus Aramid oder Imid erzielt werden.

In einer weiteren Variante wird der Kernfaden mit einer besonders hitzeunempfindlichen oder hitzeableitenden Masse wie PVC beschichtet. Die Beschichtung erfolgt ausdrücklich nur auf dem Faden und nicht auf dem Gewebe.

In einer weiteren Variante wird der Kernfaden mit einem Metall bedampft. Als bevorzugt hat sich Kupfer erwiesen.

Der Mantelfaden besteht bevorzugt aus einem hitzestabilisierten Fasermaterial. Das Fasermaterial kann beispielsweise ein Aramid sein. Das Garn kann sowohl als Faden als auch als Lunte verwendet werden. Die Lunte kann aus wärmestabilen Spinnfasern bestehen. Die Spinnfasern haben ihrerseits den Vorteil einer zusätzlichen Filterwirkung während der Pyrolyse beim Einsatz des Airbags, wobei entstehende Partikel zurückgehalten werden.

Die Erfindung soll anhand einer Zeichnung erläutert werden.

Es zeigen:
- Fig.: 1 a einen einfach umzwirnten Kernfaden
1 b einen doppelt umzwirnten Kernfaden
- Fig. 2: einen umsponnenen Kernfaden
- Fig. 3: einen beschichteten Kernfaden
- Fig. 4: einen bedampften Kernfaden

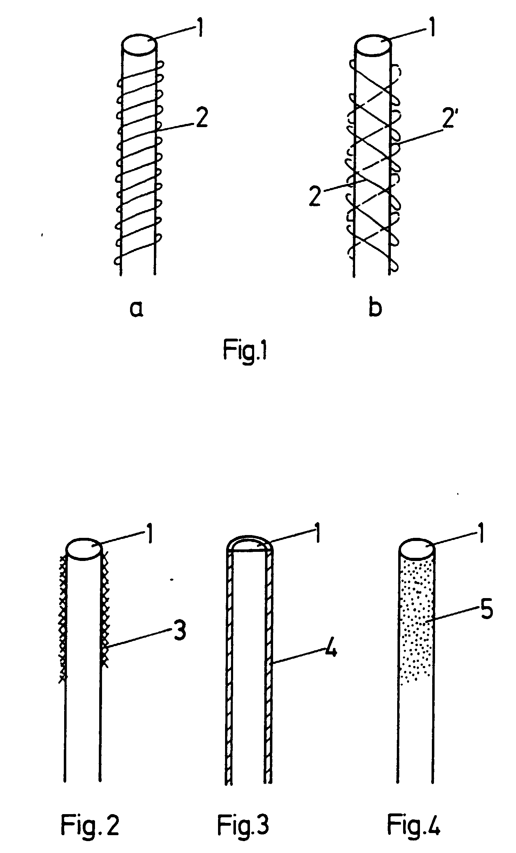

In Fig. 1 a ist ein Kernfaden 1 aus einem Polyamid-66-Filamentgarn mit einem Garn oder Zwirn 2 einfach umzwirnt.

In Fig. 1 b ist der Kernfaden 1 mit einem Garn oder Zwirn 2 und einem Garn oder Zwirn 2' umzwirnt. Die Garne oder Zwirne 2 bzw. 2' können aus gleichen oder unterschiedlichen Fasermischungen oder Zwirnen hergestellt sein.

In Fig. 2 ist der Kernfaden 1 mit Spinnfasern 3 umsponnen. Die Spinnfasern 3 können zusätzlich durch einen nicht gezeigten Begleitfaden zur Verstärkung umgeben sein.

In Fig. 3 ist der Kernfaden 1 mit einem Kunststoff 4 beschichtet.

In Fig. 4 ist auf den Kernfaden 1 eine Metallbedampfung 5 als Wärmeschild aufgebracht.

Die Erfindung soll anhand von Beispielen näher beschrieben werden.

Ergebnisse von Beispielen sind in Tabellenform dargestellt:

**Tabelle 1**

| Beispiele | 1 | 2 | 3 |
|---|---|---|---|
| Faden: | | | |
| Kern PA 6.6 % | 86 | 72 | 72 |
| Mantel Spunlunte % | 14 | 28 | 28 |
| Titer | 402 | 399 | 398 |
| Reversible Gewebedehnung | | | |
| in Kettrichtung % | 40 | 27 | 35 |
| in Schussrichtung % | 43 | 28 | 41 |
| Reisskraft N/5 cm | | | |
| Kettrichtung | 2406 | 2269 | 2158 |
| Schussrichtung | 2202 | 1907 | 2077 |
| Weiterreisskraft N | | | |
| Kettrichtung | 125 | 135 | 90 |
| Schussrichtung | 120 | 131 | 83 |
| Luftdurchlässigkeit 1 pro dm²/min | 70 | 95 | 90 |

Das erfindungsgemässe Filtergewebe ist besonders zur Herstellung für Sicherheitsgaskissen in Fahrzeugen, insbesondere in Automobilen, Bussen und Flugzeugen geeignet. Es kann aber auch überall dort eingesetzt werden wo ein rascher Gasdruckausgleich unter gleichzeitiger Filterwirkung erfolgen muss.

## Patentansprüche

1. Unbeschichtetes Filtergewebe mit einer reversiblen Gewebedehnung von 20-50 %, und einer Luftdurchlässigkeit von 30 bis 100 l pro dm²/min gemessen bei einem Druck von 500 pa. zur Herstellung von aufblasbaren Gaskissen für Fahrzeuge, gekennzeichnet, durch einen Kern-Mantelfaden, wobei der Kernfaden (1) aus einem hitzegeschützten Filamentgarn aus einem Linearen Polyamid besteht.

2. Filtergewebe nach Anspruch 1, dadurch gekennzeichnet, dass der Kernfaden (1) umzwirnt ist.

3. Filtergewebe nach Anspruch 1, dadurch gekennzeichnet, dass der Kernfaden (1) umsponnen ist.

4. Filtergewebe nach Anspruch 1, dadurch gekennzeichnet, dass der Kernfaden (1) beschichtet ist.

5. Filtergewebe nach Anspruch 1, dadurch gekennzeichnet, dass der Kernfaden (1) bedampft ist.

6. Filtergewebe nach Anspruch 1, dadurch gekennzeichnet, dass der Mantelfaden aus einem hitzestabilisierten Fasermaterial besteht.

## Claims

1. An uncoated filter fabric having a reversible extension of 20 - 50% and an air permeability of 30 to 100 l per dm²/min, measured at a pressure of 500 pa, for manufacturing inflatable gasbags for motor vehicles, characterized by a core-sheath thread in which the core thread consists of (1) a heat-protected filament yarn composed of a linear polyamide.

2. A filter fabric according to claim 1, characterized in that the core thread (1) is overwrapped.

3. A filter fabric according to claim 1, characterized in that the core thread (1) is overspun.

4. A filter fabric according to claim 1, characterized in that the core thread (1) is coated.

5. A filter fabric according to claim 1, characterized in that the core thread (1) is vapour deposition coated.

6. A filter fabric according to claim 1, characterized in that the sheath thread consists of a heat-stabilized fibre material.

## Revendications

1. Tissus filtrant non-enduit avec un allongement de tissus réversible de 20-50 % et avec une perméabilité à l'air de 30 à 100 l par dm²/min mesurée à une pression de 500 Pa, pour la fabrication de coussins à gaz gonflables pour véhicules, caractérisé par un fil noyau-manteau, où le fil noyau en (1) en polyamide linéaire est un fil de filament protégé thermiquement.

2. Tissus filtrant selon la revendication 1, caractérisé en ce que le fil noyau (1) est entouré par un autre filament.

3. Tissus filtrant selon la revendication 1, caractérisé en ce que le fil noyau (1) est entouré par des fibres.

4. Tissu filtrant selon la revendication 1, caractérisé en ce que le fil noyau (1) est enduit.

5. Tissus filtrant selon la revendication 1, caractérisé en ce que le fil noyau (1) a reçu un traitement particules métalliques..

6. Tissus filtrant selon la revendication 1, caractérisé en ce que le fil manteau est constitué par un matériau protégé contre la chaleur..
